# EUROPEAN PATENT APPLICATION

(11) **EP 4 640 642 A1**
(43) Date of publication of application: **29.10.2025**
(21) Application number: 25171766.6
(22) Date of filing: 22.04.2025
(51) Int. Cl.: C02F 9/00, C02F 1/44, C02F 1/467, C02F 101/16, C02F 103/04

(54) **ELECTROCHEMICAL WATER TREATMENT METHOD USING SELECTIVE ION SEPARATION**

(30) Priority: 22.04.2024 KR 20240053608
(71) Applicant: SK Innovation Co., Ltd., Seoul 03188 (KR)
(72) Inventor: JANG, Yoon Hyuk, 34124 Daejeon (KR); KIM, Tae Wan, 34124 Daejeon (KR); LEE, Tea Young, 34124 Daejeon (KR); JEON, Tae Hwa, 34124 Daejeon (KR); HONG, Ae Jung, 34124 Daejeon (KR)
(74) Representative: Prüfer & Partner mbB Patentanwälte · Rechtsanwälte

(57) **Abstract**

Proposed is a method of removing pollutants from wastewater. The method includes a) separating the wastewater into first treated water containing monovalent ions and second treated water containing multivalent ions, b) concentrating the monovalent ions in the first treated water to produce concentrated water, c) optionally electrochemically reducing nitric acid in the concentrated water, and d) electrochemically oxidizing organic matter in the second treated water. According to the above method, the pollutants in the wastewater can be removed efficiently and environmentally-friendly.

## Description

### BACKGROUND OF THE INVENTION

### Field of the Invention

The present disclosure relates to an electrochemical water treatment method using selective ion separation.

### Description of the Related Art

As water resource supply conditions become more difficult due to reasons such as regional imbalances in water resource distribution and droughts caused by climate change, the need for reuse of previously used water resources is increasing. However, during the process of reusing water resources, concentrated water, that is, water with a high ion concentration and a high non-degradable organic matter content is generated, so treatment of this concentrated water is required.

Meanwhile, due to climate change such as global warming, interest in the environment has recently been continuously increasing. This has led to stricter discharge requirements for pollutants such as non-biodegradable organic matter in a water system.

For the above reasons, research and development on water treatment technologies that can more efficiently and effectively remove pollutants in a water system are actively being conducted.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent No. 10-2021719

### SUMMARY OF THE INVENTION

Accordingly, the present disclosure has been made keeping in mind the above problems occurring in the related art, and one objective of the present disclosure is to provide a method of removing pollutants from water, specifically wastewater, such as an electrochemical water treatment method, using selective ion separation, the method being capable of effectively removing pollutants or organic matter in a water system without producing toxic by-products. Amongst others, a general aim may be to reduce the concentration/amount of ions and of non-degradable organic matter content.. The ion concentration (or amount) as well as the concentration (or amount) of non-degradable organic matter may be indicative for the presence of pollutants in water, especially in wastewater. In general, the higher the ion concentration (or amount), and/or the higher the content (or amount) of non-degradable organic matter, the more the water is polluted.

In order to achieve the above objective, according to one aspect of the present disclosure, there is provided a method of removing pollutants from wastewater optionally containing NO₃⁻, the method including: a) separating the wastewater into first treated water containing monovalent ions and second treated water containing multivalent ions; b) concentrating the monovalent ions in the first treated water to produce concentrated water; c) optionally electrochemically reducing nitric acid in the concentrated water; and d) electrochemically oxidizing organic matter in the second treated water. The first treated water may comprise a higher concentration (or amount) of monovalent ions compared with the wastewater, and/or the second treated water may comprise a higher concentration (or amount) of multivalent ions compared with the wastewater.

In one embodiment, the wastewater may contain monovalent ions such as NO₃⁻, and multivalent ions. In one embodiment, the monovalent ions may comprise one or more species selected from the group of Li⁺, Na⁺, Cl⁻, NO₃⁻, and HCO₃⁻, and/or the multivalent ions may comprise one or more species selected from Ca²⁺, and Mg²⁺, and SO₄²⁻.

The concentration of the respective ions may be determined by any suitable method known to a skilled person.

In one embodiment, the concentration (or amount) of ions is determined by considering any optional addition or removal of solvent(s) in step (a) to the effect that the total volume of the first and second treated water corresponds to the volume of the wastewater.

In one embodiment, in step a) inorganic carbon (IC) is separated into the first treated water as a monovalent ion, optionally mainly in the form of HCO₃⁻, and a majority (for instance defined as a remainder besides a minor content which goes into the first treated water) of total organic compound (TOC) is separated into the second treated water.

In one embodiment, step a) may be performed by a membrane separation process, a dialysis process, an ion exchange process, or a combination thereof.

In one embodiment, the first treated water after step a) may contain a reduced concentration of multivalent ions compared to multivalent ions contained in the wastewater. In one embodiment, the concentrations in the first treated water and the wastewater are calculated without considering any possible addition or removal of solvent(s).

In one embodiment, the second treated water may contain a reduced concentration of chlorine ions compared to chlorine ions contained in the wastewater. In one embodiment, the concentration of chlorine ions in the second treated water and the wastewater are calculated without considering any possible addition or removal of solvent(s).

In one embodiment, the method may further include: pre-treating the wastewater prior to step a).

In one embodiment, the pre-treating of the wastewater may include a pH control process, a lime-soda process, or a combination thereof.

In one embodiment, the method may further include: adding a separate salt into the wastewater prior to step a).

In one embodiment, step b) may be performed by a membrane process, an evaporation process, or a combination thereof.

In one embodiment, the method may further include: reducing an amount of monovalent ions in the second treated water after step a).

In one embodiment, the method may apply step c), and the method may further include: mixing the first treated water after step c) and the second treated water after step d).

In one embodiment, the method may further include: removing inorganic carbon in the concentrated water after step b).

In one embodiment, step d) may be performed by an electrochemical oxidation process, a Fenton oxidation process, an ozone oxidation process, a UV oxidation process, a hydrogen peroxide oxidation process, a catalytic oxidation process, or a combination thereof.

In an aspect of the present disclosure, the method disclosed herein may be used to reduce (lessen) the amount of total organic compound from wastewater, in particular for reducing (lessening) non-degradable organic matter content wastewater.

According to the present disclosure, it is possible to achieve environmentally friendly and efficient water treatment.

### BRIEF DESCRIPTION OF THE DRAWINGS

The above and other obj ectives, features, and other advantages of the present disclosure will be more clearly understood from the following detailed description when taken in conjunction with the accompanying drawings, in which:
FIG. 1 is a flowchart illustrating a method of removing pollutants according to an embodiment;
FIG. 2 is a flowchart illustrating a method of removing pollutants according to an embodiment;
FIG. 3 is a flowchart illustrating a method of removing pollutants according to an embodiment;
FIG. 4 is a flowchart illustrating a method of removing pollutants according to an embodiment;
FIG. 5 is a flowchart illustrating a method of removing pollutants according to an embodiment;
FIG. 6 is a flowchart illustrating a method of removing pollutants according to an embodiment;
FIG. 7 is a graph illustrating a plot of change in total organic carbon removal rate over time according to an embodiment; and
FIG. 8 is a flowchart illustrating a method of removing pollutants according to an embodiment.

### DETAILED DESCRIPTION OF THE INVENTION

Hereinbelow, the present disclosure will be described in detail with reference to the accompanying drawings. However, disclosed herein are specific illustrative embodiments that exemplify the principles of the present disclosure, and it should be emphasized that the present disclosure is not limited to the specific embodiments illustrated.

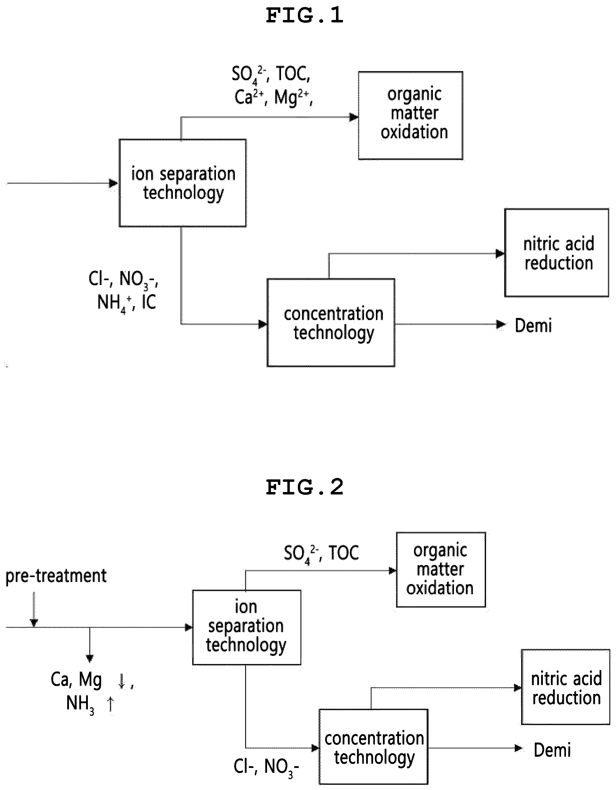

According to the present disclosure, a method of removing pollutants from wastewater containing monovalent ions (optionally including NO₃⁻) and multivalent ions is provided. The method includes: a) separating the wastewater into first treated water containing monovalent ions, which optionally includes NO₃⁻, and second treated water containing multivalent ions. The first treated water may comprise a higher concentration of monovalent ions compared with the wastewater, and/or the second treated water may comprise a higher concentration of multivalent ions compared with the wastewater; b) concentrating the monovalent ions in the first treated water to produce concentrated water; c) optionally electrochemically reducing nitric acid in the concentrated water (when present therein); and d) electrochemically oxidizing organic matter in the second treated water. The schematic flow of the method is as illustrated in FIG. 1.

The separating of the wastewater into the first treated water containing the monovalent ions and the second treated water containing the multivalent ions (step a)) is a step of selectively separating ions contained in the wastewater according to ion valence so that each treated water is introduced into an appropriate electrochemical water treatment step. For example, the first treated water separated in step a) has a higher concentration (or amount) of monovalent ions after the separation carried out in step a) than the concentration (or amount) of monovalent ions contained in the wastewater prior to the separation carried out in step a), and may contain a trace amount of multivalent ions that remain unseparated in step a). The second treated water has a higher concentration (or amount) of multivalent ions after the separation carried out in step a) than the concentration (or amount) of multivalent ions contained in the wastewater prior to separation, and may contain a trace amount of monovalent ions that remain unseparated in step a). The concentration (or amount) of the respective ions can be determined by any suitable method that is known to a skilled person. Step a) is not particularly limited as long as it is a method that can separate monovalent ions and multivalent ions. Additionally, in step a), inorganic carbon (IC) may be separated into the first treated water as a monovalent ion mainly in the form of HCO₃⁻, a very small amount of total organic carbon (TOC) may be separated into the first treated water, and the remaining majority of TOC may be separated into the second treated water. In one embodiment, step a) may be performed at least two times.

In one embodiment, step a) may be performed by a membrane separation process, a dialysis process, an ion exchange process, or a combination thereof. The membrane separation process is a process that separates the monovalent ions and the multivalent ions using a membrane such as a nanofilter and an ion exchange membrane. When the nanofilter is used, the monovalent ions and the multivalent ions may be separated from each other through the difference in ion size, and when the ion exchange membrane is used, the monovalent ions and the multivalent ions may be separated through the property of the ion exchange membrane to selectively transmit only specific ions. The dialysis process is a process to separate ions by alternately arranging ion exchange membranes that can selectively transmit only anions or cations in a reactor to form a plurality of chambers in the reactor, and adding the wastewater so that a chamber containing a concentrated solution containing cations, anions, and their salts in the wastewater and a chamber containing demi water are alternately generated. When voltage is applied after adding the wastewater into the reactor, the dialysis process may be referred to as electrodialysis. The ion exchange process is a process that separates specific ions in the wastewater by injecting an ion exchange resin made of a polymer having a strongly acidic or strongly basic functional group into the wastewater and exchanging ions in the resin with specific ions in the wastewater. Any one of the above methods or a combination thereof may be used to separate the monovalent and the multivalent ions in the wastewater. In particular, when the membrane separation process using the nanofilter is used, the monovalent ions and the multivalent ions in the wastewater may be effectively separated.

In one embodiment, the separation step a) is performed by applying a nanofilter, and/or the concentration step b) is performed by applying reverse osmosis (RO).

In one embodiment, the first treated water after step a) may contain a reduced (i.e. lower) concentration of multivalent ions compared to the multivalent ions contained in the wastewater. As described above, the first treated water may contain the monovalent ions in a concentration exceeding the concentration of the monovalent ions contained in the wastewater, and may contain a trace amount of multivalent ions that remain unseparated in step a). The trace amount of multivalent ions refers to multivalent ions that are inevitably contained in the first treated water because the ion separation efficiency of step a) is not 100% when a large amount of multivalent ions is contained in the wastewater. Among the multivalent ions contained in the first treated water, Ca ions and Mg ions may reduce reduction performance when reducing nitric acid in the first treated water in a subsequent step. As described above, the first treated water may contain only an inevitable trace amount of multivalent ions, thereby preventing degradation of nitrate reduction performance caused by presence of Ca ions and Mg ions. In one embodiment, the first treated water may contain 0% to 10% of the multivalent ions per unit volume relative to the weight of the multivalent ions per unit volume contained in the wastewater prior to step a), specifically 0% to 7%, more specifically 0% to 5% of the multivalent ions per unit volume relative to the weight of the multivalent ions per unit volume contained in the wastewater prior to step a).

In general, step a) is a separation step wherein the ions from the wastewater end up in the first and second treated water in different proportions. This means, that more multivalent ions may end up in the second treated water, and more monovalent ions may end up in the first treated water. In this respect, one can either look at the total amount of all multivalent or monovalent ions, or select one or more ions to determine the degree of separation/purification. The amount of ions can be defined based on their concentration (g/L or mol/L) provided that the volume of the wastewater does not change during step a) or provided that any changes are considered during the calculation, which means that the sum of volumes of the first and second treated water corresponds to the amount of wastewater. The separation step results in an increase of the concentration/amount of ions in the treated water.

In one embodiment the first treated water contains 0 to 10 wt.-% of one or more of the multivalent ion species, based on the weight of said one or more multivalent ion species in the wastewater, wherein the weight/concentration of one or more, or even all multivalent ion species/monovalent ion species contained in the wastewater are taken into account. This means, for example, the amount/concentration of Ca ions (as an example of multivalent ions) in the first treated water is considered on its own and is compared with the amount/concentration of Ca ions in the wastewater and the amount of Ca ions in the first treated water is compared with the amount of Ca ions in the second treated water. If no water or other solvents are removed in step a), the amount of Ca ions can be determined based on the concentrations of Ca ions in the first/second treated water and the wastewater. If in step a) water or other solvents are removed or added, the concentration has to be determined based on the volume without removal or addition of solvents (sum of volumes of first and second treated water corresponds to volume of wastewater). Alternatively, the weight of ions (without considering the volume of solvents(s) in which the ions are dissolved) can be determined in the first treated water and the wastewater. In this case, for example, a higher amount of multivalent ions from the wastewater can end up in the second treated water and a higher amount of monovalent ions from the wastewater ends up in the first treated water. Thereby, a separation is achieved. It is also possible to determine the concentration of several multivalent ions, e.g. the sum of all Ca and Mg ions.

The above correspondingly applies to the concentration/amount of monovalent ions.

Additionally, the first treated water may contain 105% to 200% of the monovalent ions per unit volume (g/L) relative to the weight of the monovalent ions per unit volume contained in the wastewater prior to step a), specifically 105% to 130%, more specifically 110% to 125% or 115% to 120% of the monovalent ions per unit volume relative to the weight of the monovalent ions per unit volume contained in the wastewater prior to step a). In one embodiment, the second treated water after step a) may contain a reduced concentration of chlorine ions compared to chlorine ions contained in the wastewater. As described above, the second treated water may contain the multivalent ions in a concentration exceeding the concentration of the multivalent ions contained in the wastewater, and may contain a trace amount of monovalent ions that remain unseparated in step a). The trace amount of monovalent ions refers to monovalent ions that are inevitably contained in the second treated water because the ion separation efficiency of step a) is not 100% when a large amount of monovalent ions is contained in the wastewater. The trace amount of monovalent ions may include chlorine ions (Cl⁻). The chlorine ions contained in the second treated water may generate a large amount of chlorine by-products when organic matter in the second treated water is oxidized in a subsequent step. These chlorine by-products may have a negative impact on the environment because they are toxic. The second treated water may contain only an inevitable trace amount of chlorine ions, thereby minimizing production of chlorine by-products during oxidation of organic matter. In one embodiment, the second treated water may contain 0% to 20% of the monovalent ions per unit volume relative to the weight of the monovalent ions per unit volume contained in the wastewater prior to step a), specifically 0% to 15%, more specifically 0% to 10% of the monovalent ions per unit volume relative to the weight of the monovalent ions per unit volume contained in the wastewater prior to step a). In particular, the second treated water may contain 0% to 5% of the chlorine ions per unit volume relative to the weight of the chlorine ions per unit volume contained in the wastewater prior to step a), specifically 0% to 4%, more specifically 0% to 3% of the chlorine ions per unit volume relative to the weight of the chlorine ions per unit volume contained in the wastewater prior to step a). Additionally, the second treated water may contain 200% to 2000% of the multivalent ions per unit volume relative to the weight of the multivalent ions per unit volume contained in the wastewater prior to step a), specifically 200% to 1300% or 200% to 1000%, more specifically 300% to 900% or 500% to 700% of the multivalent ions per unit volume relative to the weight of the multivalent ions per unit volume contained in the wastewater prior to step a).

In one embodiment, the method may further include pre-treating the wastewater prior to step a). When the amount of a specific ion in the wastewater is excessively high, for example, when the concentration of monovalent anions in the wastewater is higher than the concentration of monovalent cations in the wastewater, a large amount of monovalent anions may be contained in the second treated water. This may result in undesirable by-products as described above. On the contrary, when the concentration of the monovalent cations in the wastewater is higher than the concentration of the monovalent anions in the wastewater, a large amount of monovalent cations may be contained in the second treated water. This may require additional treatment to meet discharge standards. The pre-treating of the wastewater is a step of removing a part of ions with a high amount from the wastewater prior to step a) when there is a difference in the amounts of monovalent cations and monovalent anions in the wastewater in order to prevent the above problems. The pre-treating of the wastewater is not particularly limited as long as it is a method that can remove a high amount of specific ions from the wastewater. The schematic flow of the method of removing the pollutants from the wastewater including the pre-treating of the wastewater prior to step a) is illustrated in FIG. 2.

In one embodiment, the pre-treating of the wastewater may include a pH control process, a lime-soda process, or a combination thereof. The pH control process is a process that removes Ca ions, Mg ions, and NH₄⁺ ions in the wastewater by increasing the pH of the wastewater. Through this process, a scale problem of the method may be reduced, and the time required for post-treating ammonia in a subsequent step may be reduced. The lime-soda process is a process that removes the multivalent ions such as Ca ions and/or Mg ions present in the wastewater by adding sodium carbonate and sodium hydroxide to the wastewater, stirring the mixture to induce a chemical reaction, and then separating and removing the resulting salt through precipitation.

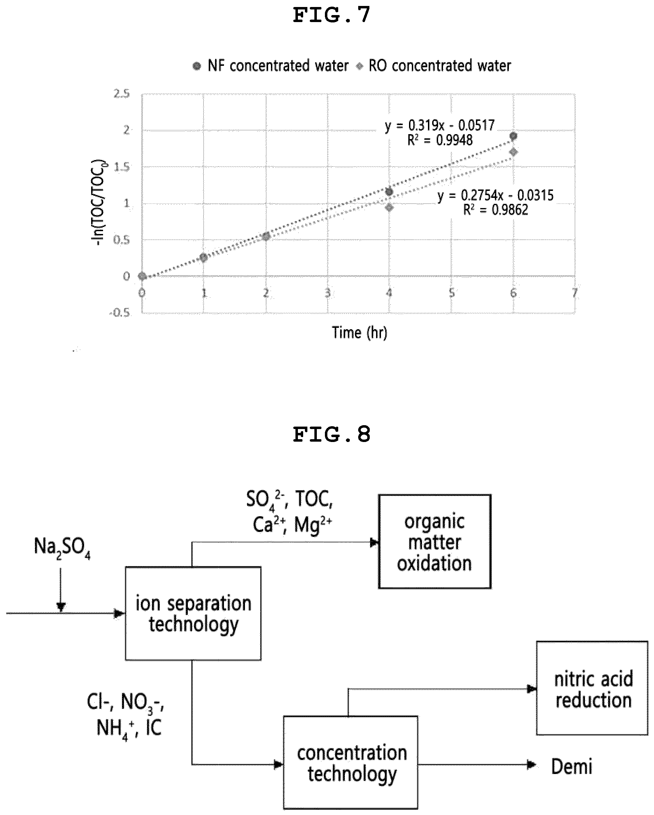

In one embodiment, the method may further include adding a separate salt into the wastewater prior to step a). As described above, when there is a difference in the concentrations of the monovalent cations and the monovalent anions in the wastewater, the selective ion separation efficiency may be reduced. To prevent this, prior to step a), a salt of a monovalent cation and a multivalent anion or a salt of a multivalent cation and a monovalent anion may be added to the wastewater to balance the concentrations of the monovalent cations and monovalent anions. When necessary, the salt may be added to create an imbalance of the monovalent cations and the monovalent anions. For example, the concentration of the monovalent cations in the wastewater may be made higher than the concentration of the monovalent anions by addition of the salt. In this case, the concentration of the monovalent anions flowing into the first treated water may be increased further, so the concentration of the monovalent anions in the second treated water may be reduced compared to when the balance of cations and anions in the wastewater is maintained. This may reduce production of chlorine by-products caused by presence of chlorine ions among the monovalent anions during oxidation of organic matter in the second treated water. Referring to FIG. 8, Na₂SO₄ may be added to the wastewater prior to step a) to balance the concentrations of the monovalent cations and the monovalent anions.

The method includes concentrating the monovalent ions in the first treated water to produce the concentrated water (step b)) after step a). In step a), more than 80% of water in the wastewater may flow into the first treated water. That is, after step a), the monovalent ions in the first treated water may be concentrated compared to the monovalent ions in the wastewater, but the degree of concentration is not large. Step b) is a step of further concentrating the monovalent ions in the first treated water. Conventional demi water production involves two concentration steps. The method may be cost-effectively implemented by replacing one of the concentration steps with a selective ion separation step. Additionally, the method may increase the organic matter oxidation efficiency by replacing one of the concentration steps with a selective ion separation step. Referring to FIG. 7, illustrated is data comparing the reactivity for organic matter oxidation between concentrated water (RO concentrated water) obtained through two concentration steps and concentrated water (NF concentrated water) obtained by separating the first treated water through the nanofilter and then concentrating the first treated water one time. In FIG. 7, it can be confirmed that the NF concentrated water has a high reactivity for oxidation of organic matter (total organic carbon, TOC) at the same oxidation time. This is believed to be because, in the case of the NF concentrated water, a side reaction in which hydroxyl radicals are used to oxidize chlorine ions (Cl⁻) does not occur.

In one embodiment, step b) may be performed by a membrane process, an evaporation process, or a combination thereof. The membrane process is a process that concentrates the monovalent ions in the first treated water using a reverse osmosis membrane and is performed in the following manner. The first treated water may be added into one of two regions of the reactor divided by the reverse osmosis membrane, and a liquid with a low concentration of monovalent ions may be added into the remaining region. Then, a pressure higher than the osmotic pressure may be artificially applied to the region where the first treated water is added so that the remaining liquid components, excluding the monovalent ions in the first treated water, are allowed to permeate through the reverse osmosis membrane into the region where the liquid with a low concentration of monovalent ions is added, thereby concentrating the monovalent ions in the first treated water. The evaporation process is a process that volatilizes the liquid components and increases the concentration of the monovalent ions by raising the temperature of the first treated water to a temperature exceeding the boiling point thereof. Through this process, the concentration of the monovalent ions in the first treated water may be significantly increased.

The method includes electrochemically reducing nitric acid, if present in the concentrated water (optional step c)). The nitric acid, which is a monovalent ion in the wastewater, may cause environmental pollution due to its toxicity when it is discharged without separate treatment. The method may solve the above problem by including the reducing of the nitric acid in the concentrated water. Specifically, in step c), the concentrated water containing the nitric acid may be added into the reactor including an anode and a cathode, electricity may be applied, and the concentrated water may be directly reduced at the cathode and converted into ammonia gas (NH₃) or nitrogen gas (N₂). That is, in step c), the nitric acid in the concentrated water may be converted into a gaseous state and volatilized. This may solve an environmental pollution problem caused by presence of nitric acid in a water system.

The method includes electrochemically oxidizing the organic matter in the second treated water (step d)). Step d) is a step of adding the second treated water into the reactor including the anode and the cathode, applying electricity, and removing the organic matter in the second treated water by oxidizing or decomposing the organic matter through ions or radicals generated at the electrodes. In step d), the organic matter in the second treated water may be removed, so the second treated water may have a water quality that is appropriate for discharge. Additionally, the second treated water may not contain monovalent ions including chlorine ions except for an inevitable trace amount, so generation of perchlorate caused by residual chlorine ions during oxidation of the organic matter in the second treated water may be prevented.

In one embodiment, step d) may be performed by an electrochemical oxidation process, a Fenton oxidation process, an ozone oxidation process, a UV oxidation process, a hydrogen peroxide oxidation process, a catalytic oxidation process, or a combination thereof. The electrochemical oxidation process is a process that directly oxidizes the pollutants at an electrode that has been applied with electricity or indirectly oxidizes the pollutants by generating an oxidizing agent. The Fenton oxidation process is a process that generates hydroxyl radicals (OH radicals) through a catalytic reaction between the organic matter and hydrogen peroxide. The ozone oxidation process is a process that adds ozone (O₃) into the second treated water, applies electricity, generates radicals, and oxidizes and decomposes the organic matter in the second treated water using instability of the radicals. The UV oxidation process and the hydrogen peroxide oxidation process are processes that generate hydroxyl radicals by irradiating ozone with ultraviolet rays or reacting the ozone with hydrogen peroxide, and oxidizes and decomposes the organic matter using the radicals. The catalytic oxidation process is a process that directly oxidizes the organic matter using a catalyst or indirectly oxidizes the organic matter by generating an oxidizing agent. Through these processes, the organic matter in the second treated water may be effectively removed.

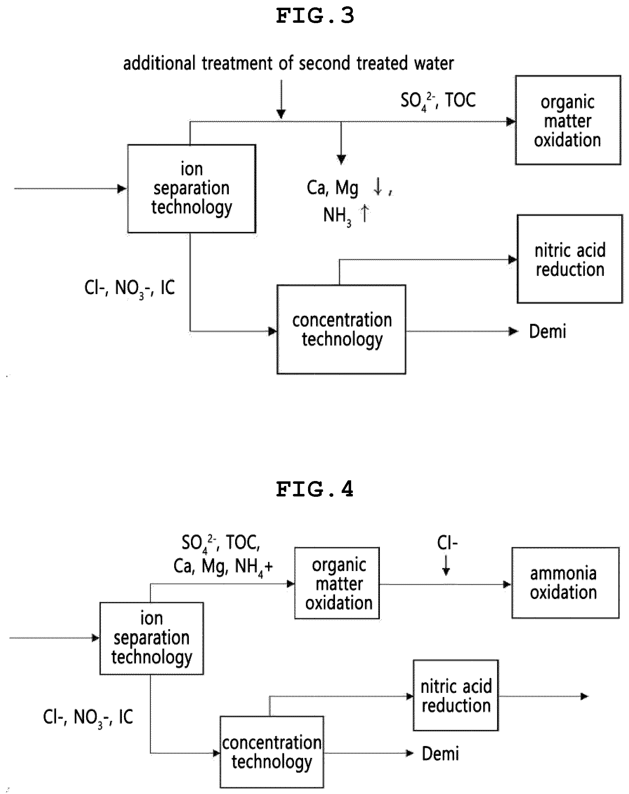

In one embodiment, the method may further include reducing the amount of monovalent ions in the second treated water after step a). As described above, the amounts of monovalent cations and monovalent anions in the wastewater may not be balanced. In particular, when there is a difference in the amounts of monovalent cations and monovalent anions in the wastewater, the second treated water after step a) may also contain a large amount of monovalent ions. The reducing of the amount of monovalent ions in the second treated water may be performed in the same manner as the pre-treating of the wastewater, and may be performed only on the second treated water separated from the first treated water after step a), that is, on a smaller amount of treated water compared to the pre-treating of the wastewater, thereby exhibiting a higher monovalent ion removal efficiency. The reducing of the amount of monovalent ions in the second treated water after step a) may be performed as indicated by "additional treatment of second treated water" in FIG. 3. Additionally, the above step may be performed by adding chlorine ions (Cl⁻) to the second treated water to induce ammonia oxidation when a large amount of NH₄⁺ is contained as a monovalent ion in the second treated water. This may be performed as indicated by "Cl⁻" in FIG. 4.

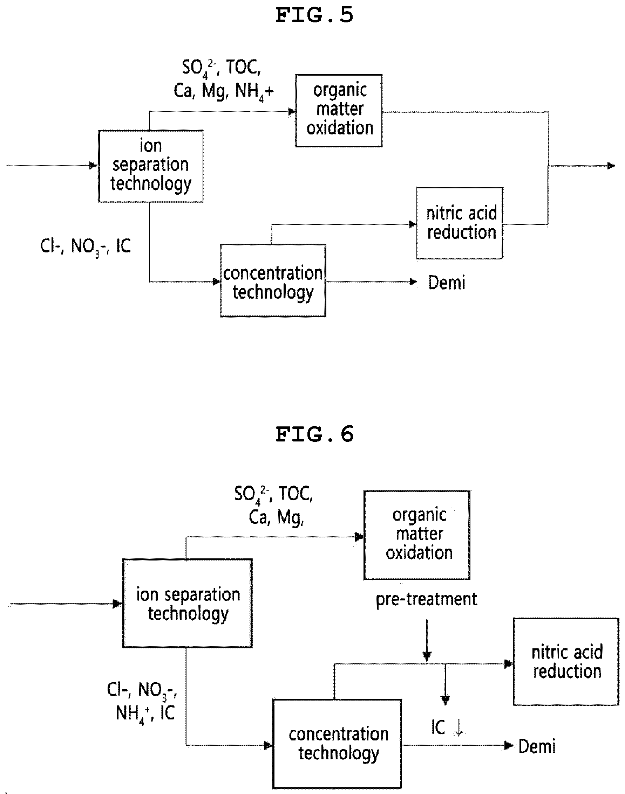

In one embodiment, the method may further include mixing the first treated water after step c) and the second treated water after step d). As mentioned above, when the amount of monovalent ions, especially NH₄⁺, in the wastewater is high, NH₄⁺ ions may remain in the second treated water after step d). In this case, the first treated water after step c) may be mixed with the second treated water after step d), and while nitric acid reduction in step c) is performed at the cathode, NH₄⁺ remaining in the second treated water may be removed using OCl⁻ generated by oxidation of Cl⁻ at the anode through a breakpoint chlorination method. The schematic flow of the method of removing the pollutants from the wastewater including the above step is as illustrated in FIG. 5.

In one embodiment, the method may further include removing inorganic carbon in the concentrated water after step b). The inorganic carbon in the concentrated water may competitively adsorb to the active sites of an electrode and inhibit a nitric acid reduction reaction. That is, when the amount of inorganic carbon in the concentrated water is high, the efficiency of the nitric acid reduction reaction may be reduced. Accordingly, in one embodiment of the present disclosure, the efficiency of the nitric acid reduction reaction may be improved by further including the removing of the inorganic carbon in the concentrated water after step b). The removing of the inorganic carbon in the concentrated water may be performed by pH control, chemical precipitation of inorganic carbon, degassing, or a combination thereof. The schematic flow of the method of removing the pollutants from the wastewater including the above step is as illustrated in FIG. 6.

Hereinafter, a preferred example is presented to help understand the present disclosure. However, the following example is provided only to facilitate understanding of the present disclosure, and the present disclosure is not limited thereto.

### Example

As illustrated in FIG. 2, a process was configured which comprises separating wastewater into first treated water containing mainly monovalent ions and second treated water containing mainly multivalent ions (step a)); concentrating the monovalent ions in the first treated water to produce concentrated water (step b)); reducing nitric acid in the concentrated water (step c)); and oxidizing organic matter in the second treated water (step d)). Step a) was performed by adding the wastewater into a separator including a nanofilter (NF), and step b) was performed using a reverse osmosis membrane (RO). The pH, ionic conductivity, and organic matter and ion concentrations of the wastewater (feed) before introduction into the process and the feed after steps a) to c) are as illustrated in Table 1 below.

**Table 1**

| Sample | pH | Cond | TOC | IC | T-N (total nitrogen) | Ca²⁺ | Mi²⁺ | Cl⁻ | SO₄²⁻ | NO₃⁻ | NH₄⁺ |
|---|---|---|---|---|---|---|---|---|---|---|---|
| | - | mS/cm | mg/L | mg/L | mg/L | mg/L | mg/L | mg/L | mg/L | mg/L | mg/L |
| Feed (wastewater) | 7.65 | 7.51 | 6.74 | 12.04 | 2.53 | 42.4 | 6.4 | 174 | 3000 | 10 | <2 |
| First treated water (after step a) | 7.93 | 1.04 | 1.62 | 13.3 | 1.98 | 0.3 | 0 | 192 | 96 | 12 | <1 |
| Second treated water (after step a) | 6.91 | 39.86 | 51.81 | 2.048 | 8.52 | 454.9 | 54.6 | 5 | 27000 | <1 | <10 |
| Concentrated water (after step b) | 8.34 | 6.81 | 6.62 | 91.27 | 22.34 | 3.9 | 0.6 | 1000 | 766 | 82 | <2 |
| Demi water (after step b) | 6.93 | 0.01 | 0.42 | 0.74 | 0 | 0 | 0 | 1 | <1 | <1 | <1 |

Thereafter, the second treated water separated in step a) was introduced into electrochemical oxidation (step d) to oxidize the organic matter, and the results are illustrated in Table 2 below.

**Table 2**

| Reaction time | TOC | TOC removal rate |
|---|---|---|
| hr | mg/L | % |
| 0 | 50.32 | |
| 1 | 38.58 | 23.33 |
| 2 | 29.21 | 41.95 |
| 4 | 15.81 | 68.58 |
| 6 | 7.37 | 85.35 |

From Table 2, it can be confirmed that the degree of organic matter removal increased over time.

The present disclosure has been described in detail through specific embodiments. The embodiments of the present disclosure are disclosed only for illustrative purposes and should not be construed as limiting the present disclosure.

## Claims

1. A method of removing pollutants from wastewater optionally containing NO₃⁻ , the method comprising:
a) separating the wastewater into first treated water containing monovalent ions and second treated water containing multivalent ions, wherein the first treated water comprises a higher concentration of monovalent ions compared with the wastewater and/or wherein the second treated water comprises a higher concentration of multivalent ions compared with the wastewater;
b) concentrating the monovalent ions in the first treated water to produce concentrated water;
c) optionally electrochemically reducing nitric acid in the concentrated water; and
d) electrochemically oxidizing organic matter in the second treated water.

2. The method of claim 1, wherein the concentration of ions is determined by considering any optional addition or removal of solvent(s) in step (a) to the effect that the total volume of the first and second treated water corresponds to the volume of the wastewater;

3. The method of claim 1 or 2, wherein the monovalent ions comprise one or more species selected from the group of Li⁺, Na⁺, Cl⁻, NO₃⁻, and HCO₃⁻, and/or the multivalent ions comprise one or more species selected from Ca²⁺, Mg²⁺, and SO₄²⁻.

4. The method of any one of claims 1 to 3, wherein in step a), inorganic carbon (IC) is separated into the first treated water optionally mainly in the form of HCO₃⁻, and a majority of total organic compound (TOC) is separated into the second treated water.

5. The method of any one of claims 1 to 4, wherein step a) is performed by applying a membrane separation process, a dialysis process, an ion exchange process, or a combination thereof.

6. The method of any of claims 1 to 5, wherein the first treated water after step a) contains a reduced concentration of multivalent ions compared to multivalent ions contained in the wastewater, wherein the concentrations in the first treated water and the wastewater are calculated without considering any addition or removal of solvent(s).

7. The method of any one of claims 1 to 6, wherein the second treated water after step a) contains a reduced concentration of chlorine ions compared to chlorine ions contained in the wastewater, wherein the concentrations of chlorine ions in the second treated water and the wastewater are calculated without considering any addition or removal of solvent(s).

8. The method of any one of claims 1 to 7, further comprising:
pre-treating the wastewater prior to step a)
, preferably wherein the pre-treating of the wastewater comprises a pH control process, a lime-soda process, or a combination thereof.

9. The method of any one of claims 1 to 8, further comprising:
adding a separate salt into the wastewater prior to step a), preferably wherein the separate salt is added to balance the concentrations of the monovalent cations and monovalent anions in the wastewater prior to step a).

10. The method of any one of claims 1 to 9, wherein step b) is performed by a membrane process, an evaporation process, or a combination thereof.

11. The method of any one of claims 1 to 10, further comprising:
a step of reducing an amount of monovalent ions in the second treated water after step a).

12. The method of any one of claims 1 to 11, wherein step c) is applied, preferably further comprising:
mixing the first treated water after step c) and the second treated water after step d).

13. The method of any one of claims 1 to 12, further comprising:
removing inorganic carbon in the concentrated water after step b).

14. The method of any one of claims 1 to 13, wherein step d) is performed by an electrochemical oxidation process, a Fenton oxidation process, an ozone oxidation process, a UV oxidation process, a hydrogen peroxide oxidation process, a catalytic oxidation process, or a combination thereof.

15. Use of the method according to any one of claims 1 to 14 for reducing the amount of total organic compound from wastewater, in particular for reducing non-degradable organic matter content in wastewater.
